Europäisches Patentamt

European Patent Office

Office européen des brevets

(19)

(11) Numéro de publication : **0 679 001 A1**

(12) # DEMANDE DE BREVET EUROPEEN

(21) Numéro de dépôt : **95400554.2**

(22) Date de dépôt : **14.03.95**

(51) Int. Cl.$^6$ : **H04L 25/06**

(30) Priorité : **18.04.94 FR 9404606**

(43) Date de publication de la demande :
**25.10.95 Bulletin 95/43**

(84) Etats contractants désignés :
**DE ES GB IT SE**

(71) Demandeur : **SAT (Société Anonyme de
Télécommunications)
6, avenue d'Iéna
F-75116 Paris (FR)**

(72) Inventeur : **Karam, Georges
58 B, rue du Dessous-des-Berges
F-75625 Paris Cédex 13 (FR)**
Inventeur : **Jacquart, Jean-Louis
58 B, rue du Dessous-des-Berges
F-75625 Paris Cédex 13 (FR)**

(74) Mandataire : **Cabinet Martinet & Lapoux
BP 405
F-78055 Saint Quentin en Yvelines Cédex (FR)**

(54) **Dispositif de décision à seuils adaptatifs pour modulation non-linéaire.**

(57) Le dispositif de décision produit, à une fréquence de symbole, des symboles ($a_k$) en fonction de niveaux d'un signal en bande de base (S*) démodulé reçu. Il comprend un diviseur de tension ($302_0$ -$302_2N_{-1}$), un additionneur (36) pour additionner le signal en bande de base (S*) à une tension sensiblement moyenne des tensions inférieure et supérieure (VS, VI) appliquées aux bornes du diviseur de tension, en un signal translaté, plusieurs comparateurs ($300_1$-$300_2N_{-1}$) pour comparer le signal translaté (ST) respectivement avec plusieurs tensions ($E_1$-$E_2N_{-1}$) à des bornes du diviseur de tension afin de produire des signaux de résultat de comparaison, des bascules et un encodeur ($301_1$-$301_2N_{-1}$ ; 303 ; 304) pour établir des mots de commande (SC) en fonction des signaux de résultat de comparaison, et des circuits d'asservissement (31, $34^-$, $35^-$ ; 31, $34^+$, $35^+$) pour asservir indépendamment au moins les tensions inférieure et supérieure (VI, VS) en fonction des mots de commande (SC).

FIG. 6

EP 0 679 001 A1

La présente invention concerne de manière générale des décisions dans une chaîne de réception d'un système de modulation-démodulation à multiétat. Plus particulièrement, la présente invention concerne un dispositif de décision pour système de modulation-démodulation non linéaire, typiquement système de modulation-démodulation de fréquence.

Dans une chaîne de réception, un dispositif de décision est connecté en sortie d'un dispositif de démodulation. Le dispositif de décision détermine respectivement à des instants successifs d'échantillonnage d'un signal démodulé, des symboles successifs reçus en comparant le niveau du signal démodulé avec des seuils prédéterminés.

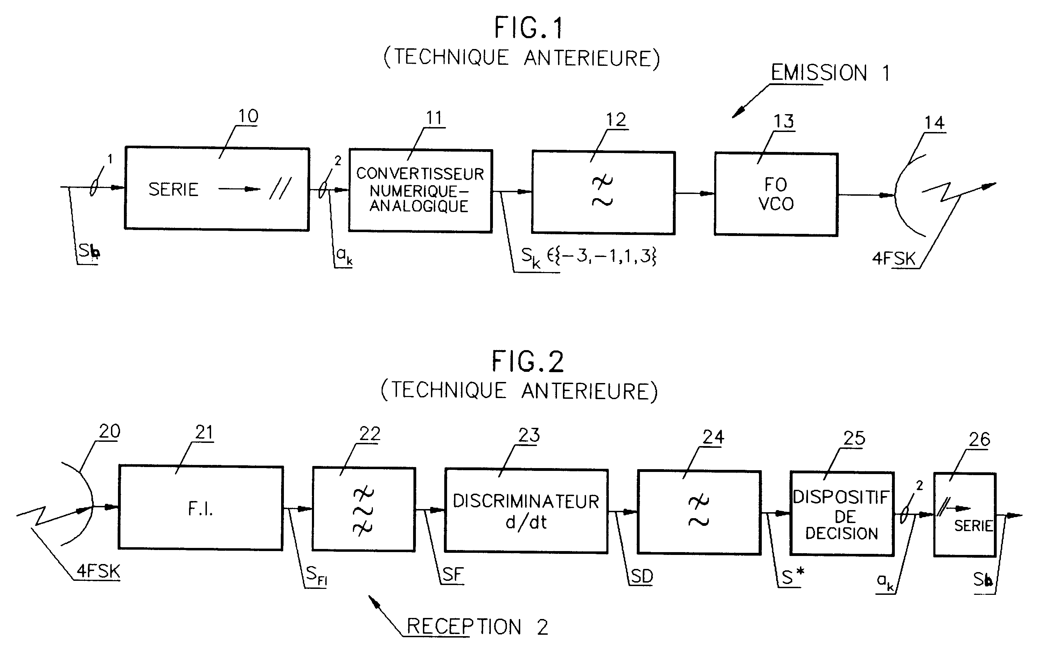

Les figures 1 et 2 montrent respectivement une chaîne d'émission 1 et une chaîne de réception 2 formant ensemble un système de modulation-démodulation de fréquence à quatre états, dit système 4FSK ou Four-Frequency Shift Keying en terminologie anglo-saxonne.

En référence à la figure 1, la chaîne d'émission comprend un convertisseur série-parallèle 10, un convertisseur numérique-analogique 11, un filtre passe-bas 12 et un oscillateur commandé en tension 13. Si la liaison entre les chaînes 1 et 2 est de nature radioélectrique, une sortie de la chaîne d'émission 1 et une entrée de la chaîne de réception 2 présentent des antennes 14 et 20. La chaîne de réception 2 comprend à la suite de l'antenne 20 un étage de transposition de fréquence dans lequel la fréquence de signal est convertie à une fréquence intermédiaire F.I 21, un filtre passe-bande 22, un discriminateur de fréquence 23, un filtre passe-bas 24, un dispositif de décision 25, et un convertisseur parallèle-série 26.

Un signal binaire série en bande de base à transmettre Sb est converti dans le convertisseur 10 en un signal de mots-symboles à deux éléments binaires parallèles $a_k$. Chaque mot $a_k$ est associé à deux éléments binaires du signal série Sb et appartient à un alphabet de mots-symboles, noté {00, 01, 10, 11}. Chacun des mots $a_k$ est converti dans le convertisseur numérique-analogique 11 en un symbole $S_k$ ayant l'un de quatre niveaux -3, -1, 1, 3 en dépendance du mot-symbole respectif 00, 10, 01, 11. Le signal formé des symboles successifs $S_k$ est appliqué, à travers le filtre 12 qui lisse le spectre du signal des symboles successifs, à une entrée de l'oscillateur 13. L'oscillateur 13 produit un signal modulé en fréquence 4FSK à quatre états prenant l'une respective de quatre fréquences FO-3Fd, FO-Fd, FO+Fd, FO+3Fd, en dépendance du niveau respectif -3, -1, 1, +3 du symbole $S_k$, FO et Fd désignant respectivement la fréquence nominale de l'oscillateur 13 et un écart de fréquence prédéterminé.

Le signal modulé en fréquence 4FSK est émis à travers l'antenne d'émission 14, puis reçu par l'antenne de réception 20. Il est transmis de l'antenne 20 à l'étage de transposition 21 qui transpose le spectre du signal modulé reçu 4FSK en un signal à fréquence intermédiaire $S_{FI}$. Le signal $S_{FI}$ est filtré dans une bande de fréquence étroite centrée sur une fréquence centrale intermédiaire correspondant à la fréquence FO transposée, par le filtre passe-bande 22. Le signal filtré SF issu du filtre 22 est appliqué à une entrée du discriminateur 23. Par des opérations de dérivation temporelle, le discriminateur 23 discrimine des fréquences dans le signal filtré SF et délivre un signal SD ayant des niveaux sensiblement égaux à -3, -1, 1, 3 en dépendance des symboles $S_k$ transmis. Ce signal SD est filtré passe-bas dans le filtre 24 en un signal analogique S*. Dans le dispositif de décision 25, le signal S* est échantillonné à la fréquence des symboles émis $S_k$. Les niveaux pris par le signal S* à des instants d'échantillonnage sont comparés à des seuils dans le dispositif 25 qui délivre les mots-symboles $a_k$ en fonction du résultat des comparaisons. Par conversion parallèle-série des mots-symboles $a_k$, le convertisseur 26 délivre le signal binaire original Sb émis.

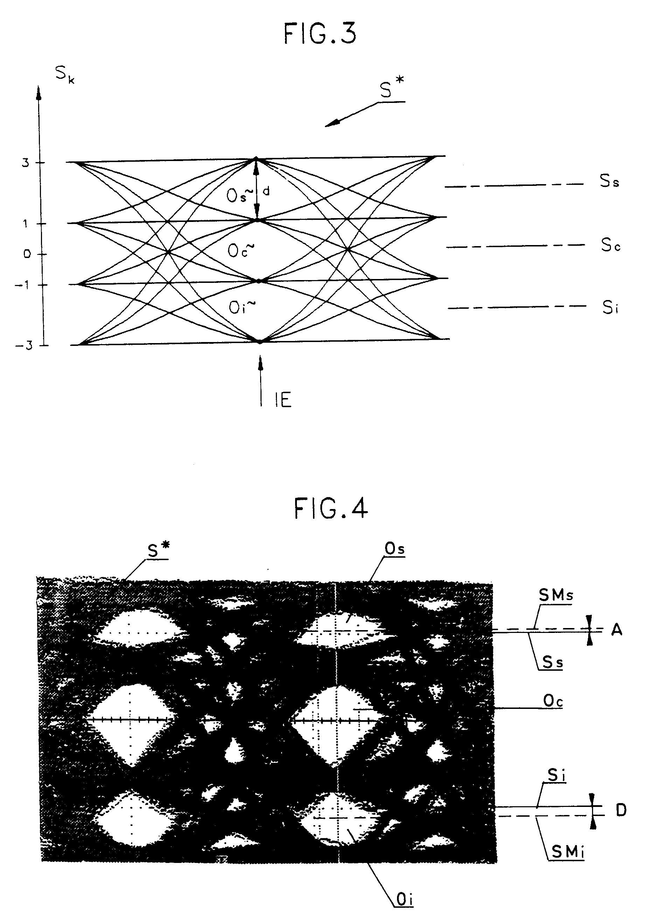

La figure 3 montre un diagramme de l'oeil théorique d'un signal en bande de base S* résultant de modulation et démodulation de fréquence à quatre états, tel que délivré par le filtre passe-bas 24 dans la chaîne de réception 2. Dans ce diagramme théorique, l'ouverture verticale d de chacun des yeux supérieur Os, central Oc et inférieur Oi est maximale et égale à la différence des niveaux respectifs de deux symboles voisins, soit d=(3-1)=1-(-1)=-1-(-3)=2. Un tel diagramme théorique traduit une interférence intersymbole nulle à des instants d'échantillonnage. Dans le dispositif de décision 25, le signal en bande de base S* délivré par le filtre 24 est échantillonné à des instants significatifs d'échantillonnage IE, et les niveaux des échantillons résultants sont comparés à trois seuils Ss, Sc et Si indiqués à droite dans la figure 3. Pour chaque échantillon, quatre cas distincts peuvent se produire. Si le niveau de l'échantillon est supérieur au seuil supérieur Ss, alors le dispositif de décision 25 délivre le mot-échantillon "11" associé au symbole $S_k$ = 3; si le niveau d'échantillon est compris entre le seuil supérieur Ss et le seuil central Sc, alors le dispositif de décision 25 produit le mot-symbole "01" associé au symbole $S_k$ = 1; si le niveau d'échantillon est compris entre le seuil central Sc et le seuil inférieur Si, alors le mot-symbole "10" est produit par le dispositif 25; et enfin pour un niveau d'échantillon inférieur au seuil Si, alors le mot-symbole "OO" associé au symbole $S_k$ = -3 est produit.

Dans le dispositif de décision 25 d'une chaîne de réception selon la technique antérieure, les seuils de décision Ss, Sc et Si sont constants, et le niveau du signal S* reçu est ajusté par rapport aux seuils de décision constants. Un tel ajustement peut résulter d'un "décalage" et/ou d'une "amplification" du signal en bande de base S*.

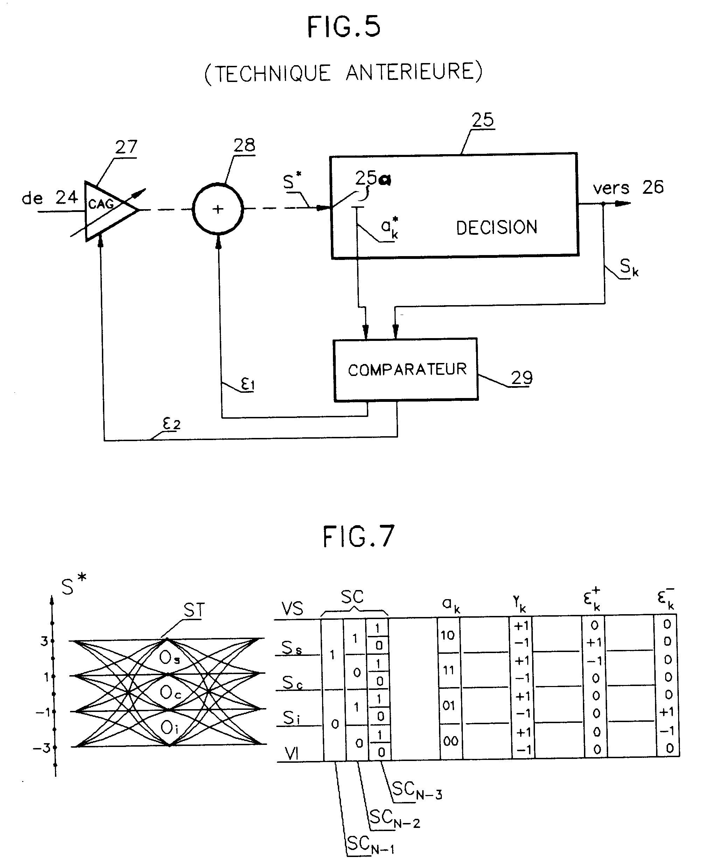

Comme montré dans la figure 5, les moyens utiles à l'ajustement du signal en bande de base S* sont sous la forme d'un amplificateur à commande automatique de gain (CAG) 27 et d'un additionneur 28, tous deux disposés en amont du dispositif de décision 25 dans la chaîne de réception 2, et d'un comparateur 29. Des entrées du comparateur 29 reçoivent respectivement, à la fréquence d'émission des symboles, les échantillons $a_k^*$ résultant de l'échantillonnage 25a du signal en bande de base S*, et les symboles $S_k$ correspondants produits par le dispositif de décision 25. Par comparaison des signaux $a_k^*$ et $S_k$, le comparateur produit deux signaux d'erreur $\varepsilon 1$ et $\varepsilon 2$ respectivement appliqués à une entrée de commande de l'amplificateur 27 et à une seconde entrée de l'additionneur 28. En réponse, l'amplificateur 27 amplifie le signal reçu S* et l'additionneur 28 décale la composante continue dans le signal reçu, et donc le signal en bande de base S*, de manière à asservir le niveau de chaque échantillon $a_k^*$ au niveau du symbole correspondant $S_k$. L'ajustement du signal S* réduit le taux d'erreur dans le signal binaire reçu Sb issu du convertisseur parallèle-série 26.

L'opération de décalage du signal S* par l'additionneur 28 peut être comprise comme un décalage, ou translation, simultané des trois seuils Ss, Sc et Si.

L'opération d'amplification du signal S* par l'amplificateur 27 peut pour sa part être comprise comme deux translations respectives de module égal et de sens opposés des seuils Ss et Si par rapport au seuil Sc.

L'asservissement de l'amplitude du signal S* en fonction des seuils prédéterminés constants Ss, Sc et Si, au moyen d'un amplificateur à commande automatique de gain 27, produit un résultat satisfaisant en terme de réduction de taux d'erreur à condition que les yeux supérieur Os et inférieur Oi dans le diagramme de l'oeil présentent des ouvertures d sensiblement égales et symétriques par rapport à un axe horizontal correspondant au seuil Sc dans la figure 3. En pratique, si cette condition est satisfaite pour les systèmes à modulation de type linéaire, tels que systèmes à modulation d'amplitude, elle s'avère insatisfaite pour des systèmes à modulation non linéaire, typiquement systèmes à modulation de fréquence.

En effet, comme montré dans le diagramme de l'oeil de la figure 4 relatif à une modulation de fréquence à quatre états, l'oeil supérieur Os et l'oeil inférieur Oi ne présentent pas les caractéristiques précitées de symétrie et d'ouverture d'oeil. La figure 4 montre également les seuils supérieur et inférieur optimaux théoriques Ss et Si correspondant au cas d'une interférence intersymbole nulle. Il apparaît qu'une réduction du taux d'erreur à une valeur minimale implique une augmentation négligeable A du seuil supérieur Ss en un seuil supérieur modifié SMs, et une diminution D plus marquée du seuil inférieur Si en un seuil inférieur modifié SMi. Cette modification des seuils Ss et Si en les seuils SMs et SMi ne résulte pas de translations de module égal et de sens opposés respectivement des seuils Ss et Si par rapport au seuil central Sc, comme cela est effectué par un amplificateur à commande automatique de gain 27 dans la technique antérieure.

L'invention vise à fournir un dispositif de décision adapté aux systèmes à modulation non linéaire dans lesquels un signal en bande de base, résultant de modulation et démodulation, présente en moyenne à des instants d'échantillonnage significatifs, des niveaux dissymétriques par rapport à un axe de niveau nul. Cette caractéristique de signal se traduit par un diagramme de l'oeil dissymétrique. Elle résulte de la dissymétrie des filtrages dans les chaînes d'émission et de réception d'un système de modulation non linéaire de type modulation de fréquence.

A cette fin, selon l'invention, un dispositif de décision pour produire, à une fréquence de symbole, des symboles en fonction de niveaux d'un signal en bande de base résultant d'une démodulation d'un signal modulé en fréquence à plusieurs états, est caractérisé en ce qu'il comprend

un moyen de division de tension ayant des première et seconde bornes auxquelles sont appliquées respectivement des tensions inférieure et supérieure limitant une plage de tension, pour établir plusieurs tensions réparties dans ladite plage,

un moyen d'addition pour additionner le signal en bande de base à une tension milieu qui est sensiblement égale à la moyenne des tensions inférieure et supérieure et établie par le moyen de division de tension de manière à produire un signal translaté,

plusieurs moyens de comparaison pour comparer le signal translaté respectivement avec lesdites plusieurs tensions afin de produire des signaux de résultat de comparaison,

un moyen de codage pour établir des mots de commande à la fréquence de symbole, chacun des mots de commande étant fonction des signaux de résultat de comparaison représentatifs d'un niveau du signal en bande de base par rapport à des seuils de décision inférieur, central et supérieur correspondant respectivement à trois tensions desdites plusieurs tensions, et

des premier et second moyens d'asservissement pour asservir respectivement et indépendamment les tensions inférieure et supérieure en fonction des mots de commande.

Les premier et second moyens d'asservissement corrigent particulièrement les décisions au niveau de l'oeil inférieur Oi et l'oeil supérieur Os. A cette fin, les premier et second moyens d'asservissement respectivement comprennent de préférence

des premier et second moyens logiques pour produire respectivement des premier et second signaux d'erreur à trois états,

le premier, respectivement second, signal d'erreur étant à deux états prédéterminés uniquement en réponse à deux premiers, respectivement seconds, mots de commande prédéterminés dépendant de deux premiers, respectivement seconds, niveaux du signal translaté situés de part et d'autre du seuil de décision inférieur, respectivement supérieur,

des premier et second intégrateurs pour intégrer les premier et second signaux d'erreur en des premier et second signaux intégrés, et

des premier et second additionneurs pour additionner respectivement le premier signal intégré avec une tension nominale inférieure et le second signal intégré avec une tension nominale supérieure afin d'établir lesdites tensions inférieure et supérieure.

L'invention tente également de remédier aux dissymétries de l'oeil central Oi dans le diagramme de l'oeil (figure 4). Le dispositif de décision comprend alors un troisième moyen d'asservissement pour asservir, en fonction des mots de commande et de la tension milieu, le seuil de décision central à additionner, à la place de la tension milieu, au signal en bande de base dans le moyen d'addition. Le troisième moyen d'asservissement peut comprendre, de manière analogue aux premier et second moyens d'asservissement,

un troisième moyen logique pour produire un troisième signal d'erreur à au moins deux états, le troisième signal d'erreur étant à deux états prédéterminés en réponse à deux troisièmes mots de commande prédéterminés dépendant de deux niveaux du signal translaté situés de part et d'autre du seuil de décision central,

un troisième intégrateur pour intégrer le troisième signal d'erreur en un troisième signal intégré, et

un troisième additionneur pour additionner le troisième signal intégré et ladite tension milieu afin d'établir ledit seuil de décision central.

Le moyen de codage comprend plusieurs moyens pour échantillonner à la fréquence de symbole les signaux de résultat de comparaison en des signaux de comparaison échantillonnés, et un moyen pour coder les signaux de comparaison échantillonnés en un mot de rang identifiant le rang le plus élevé parmi les moyens de comparaison ayant produit un signal de résultat de comparaison avec un niveau logique prédéterminé, au moins trois bits de poids forts des mots de rang constituant les mots de commande.

Selon une réalisation de l'invention, chacun des moyens d'échantillonnage est une bascule logique de type D.

Le dispositif de décision comprend en outre un circuit de récupération de rythme recevant l'un des bits dudit mot de rang pour produire un signal d'échantillonnage cadençant l'échantillonnage dans les moyens pour échantillonner.

En pratique, le moyen de division de tension, les moyens de comparaison et le moyen de codage sont inclus dans un composant intégré formant un convertisseur analogique-numérique.

D'autres caractéristiques et avantages de la présente invention apparaîtront plus clairement à la lecture de la description suivante en référence aux dessins annexés correspondants dont les cinq premières figures ont déjà été commentées, et dans lesquels :

- les figures 1 et 2 sont respectivement des blocs-diagrammes d'une chaîne d'émission et d'une chaîne de réception formant un système de modulation-démodulation non linéaire à quatre états ;
- la figure 3 est un diagramme de l'oeil théorique d'un signal en bande de base résultant d'une démodulation d'un signal modulé en fréquence à quatre états ;
- la figure 4 est un diagramme de l'oeil réellement observé du signal en bande de base distordu par des filtrages successifs, et résultant d'une démodulation d'un signal modulé en fréquence à quatre états ;
- la figure 5 est un bloc-diagramme d'un dispositif de décision avec un asservissement d'un signal en bande de base selon la technique antérieure, inclus dans un chaîne de réception du type montré à la figure 2 ;
- la figure 6 est un bloc-diagramme détaillé d'un dispositif de décision à seuils adaptatifs selon l'invention; et
- la figure 7 est une table de signaux d'asservissement associés à un diagramme de l'oeil théorique analogue à la figure 3 et produits par un circuit logique inclus dans le dispositif de décision montré de la figure 6.

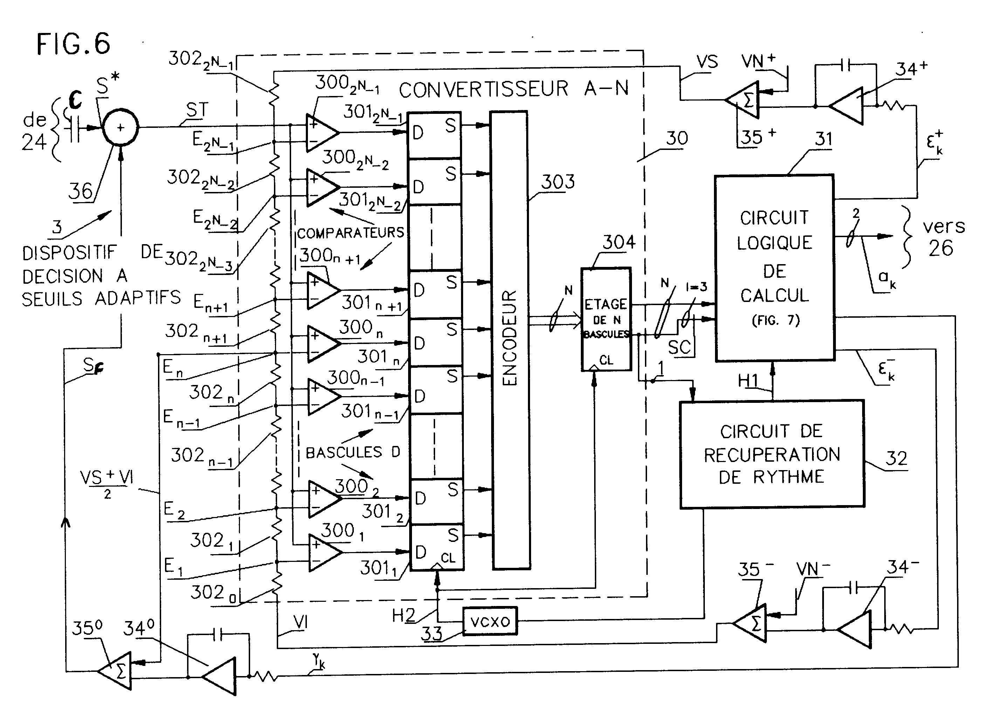

En référence à la figure 6, un dispositif de décision à seuils adaptatifs 3 selon l'invention comprend un convertisseur analogique-numérique 30, un circuit logique de calcul 31, un circuit de récupération de rythme 32, un oscillateur commandé en tension 33, trois intégrateurs $34^-$, $34°$ et $34^+$ et quatre additionneurs $35^-$, $35°$, $35^+$ et 36.

Le convertisseur analogique-numérique 30 de précision N comprend $2^N-1$ comparateurs $300_1$ à $300_{2^N-1}$, $2^N-1$ bascules D $301_1$ à $301_{2^N-1}$, une série de $2^N$ résistances $302_0$ à $302_{2^N-1}$, un encodeur 303, et un étage 304 à N bascules parallèles de type D, N étant un entier prédéterminé au moins égal à 3.

A deux bornes de la série de $2^N$ résistances $302_0$ à $302_{2^N-1}$ formant un étage diviseur de tension sont appliquées respectivement une tension inférieure VI et une tension supérieure VS. Lesdites deux bornes sont une borne de la première résistance $302_0$ et une borne de la dernière résistance $302_{2^N-1}$. Les tensions limites VI et VS délimitent une plage de quantification d'un signal reçu dans le convertisseur 30. $2^N-1$ bornes communes à des résistances successives appariées ($302_{n-1}$, $302_n$), avec n compris entre 1 et $2^N$,

sont portées à des tensions respectives $E_1$ à $E_2N_{-1}$ qui croissent dans la plage de quantification (VS-VI). Toutes les résistances $302_0$ à $302_2N_{-1}$ ont une même valeur ohmique R. La tension aux bornes de chacune des résistances $302_0$ à $302_2N_{-1}$ est égale à $(VS-VI)/2^N$ et définit le pas de quantification, c'est-à-dire la précision du convertisseur 30.

Des bornes positives (+) des $2^N-1$ comparateurs $300_1$ à $300_2N-1$ reçoivent un signal analogique translaté en bande de base ST résultant de la translation dans l'additionneur 36 du signal S* issu du filtre 24 inclus dans la chaîne de réception 2 (figure 2). De préférence, l'additionneur 36 est précédé par un condensateur C rejetant toute composante continue dans le signal S*. A des bornes négatives (-) des comparateurs $300_1$ à $300_2N_{-1}$ sont appliquées les tensions $E_1$ à $E_2N_{-1}$ croissantes en progression arithmétique, produites aux bornes communes des résistances en série. Chaque comparateur $300_n$, n étant compris entre 1 et $2^N-1$, produit un signal logique représentatif à chaque instant du résultat de la comparaison de la tension $E_n$ avec le signal translaté ST. Ainsi pour un niveau du signal translaté ST compris entre les tensions $E_n$ et $E_{n+1}$, tous les comparateurs $300_m$, avec m≦n, produisent un signal à l'état "1" et tous les comparateurs $300_m$, avec m≧n+1, produisent un signal à l'état "0".

Les sorties des comparateurs $300_1$ à $300_2N_{-1}$ sont reliées respectivement à des entrées de données D des $2^N-1$ bascules d'échantillonnage de type D $301_1$ à $301_2N_{-1}$. Une entrée d'horloge CL de ces $2^N-1$ bascules $301_1$ à $301_2N_{-1}$ reçoit un signal d'horloge H2 produit par l'oscillateur commandé en tension 33. Les états correspondants "1" et "0" aux sorties des comparateurs $300_1$ à $300_2N_{-1}$ sont mémorisés respectivement à des sorties de données S des $2^N$ bascules D en réponse à chaque front actif du signal H2 et pendant une période de ce signal d'horloge H2. Les sorties S des $2^N-1$ bascules D sont respectivement reliées à $2^N-1$ entrées de l'encodeur 303 qui produit un mot de rang de bascule à N bits correspondant au rang le plus élevé des bascules D dont les sorties ont produit un état "1". Dans l'exemple cité précédemment relatif à un niveau du signal translaté ST compris entre les tensions $E_n$ et $E_{n+1}$, le mot de rang produit par l'encodeur 303 correspond au rang n en code binaire de la bascule $301_n$. Lorsque le signal ST est compris entre les tensions VI et $E_1 = VI + (VS - VI)/2^N$, les bits du mot de rang sont tous égaux à "0".

Le mot de rang à N bits produit par l'encodeur est mémorisé dans l'étage 304 par N bascules cadencées par le signal d'horloge H2. Seuls I=3 des N bits parallèles aux sorties de l'étage 304 sont appliqués à un port d'entrée du circuit logique de calcul 31. Ces I=3 bits sont les trois bits $SC_{N-1}$, $SC_{N-2}$ et $SC_{N-3}$ de poids forts (MSB) du mot de rang à N bits et forment un mot de signal de commande SC.

Il est à noter que l'un des bits du mot de rang en sortie de l'étage de bascules 304, de préférence le bit de poids fort (MSB), est appliqué à une entrée du circuit de récupération de rythme 32 qui produit un signal d'horloge H1 et commande l'oscillateur commandé en tension 33 produisant le signal d'horloge H2. Le signal d'horloge H2 est ainsi asservi à la phase des symboles reçus pour échantillonner les signaux de résultat de comparaison dans les bascules D $300_1$-$300_2N_{-1}$.

En référence à la figure 7, une table de signaux d'asservissement établis par le circuit logique de calcul 31 est maintenant présentée. Le circuit logique de calcul est cadencé par le signal d'horloge H1, ayant typiquement une fréquence égale à la moitié de la fréquence du signal d'horloge H2. Comme montré dans les trois colonnes de gauche de la table, les I = 3 bits de poids fort $SC_{N-1}$, $SC_{N-2}$ et $SC_{N-3}$ du mot de rang formant le signal de commande SC sont suffisants pour décrire chaque niveau du signal translaté ST par rapport, d'une part, aux niveaux théoriques des symboles $S_k$ dans l'ensemble {-3, -1, +1, +3}, et, d'autre part, aux seuils de décision Si, Sc et Ss. Dans le cas de la réalisation décrite, les seuils inférieur Si et supérieur Ss correspondent respectivement à une tension de borne commune Ei sensiblement égale à VI+(VS-VI)/4 et une tension de borne commune Es sensiblement égale à VS-(VS-VI)/4. Le circuit 31 produit, à la fréquence des symboles H1, des mots-symboles à deux bits $a_k$, un signal logique d'erreur d'ajustement de seuil inférieur à trois états $\varepsilon_k^-$, un signal d'erreur d'ajustement de seuil supérieur à trois états $\varepsilon_k^+$, et un signal bipolaire d'erreur de décalage $\gamma_k$ pour translater le signal en bande de base S*. Chacun des mots-symboles $a_k$ à deux bits est produit par le circuit 31 en dépendance des deux premiers bits de poids fort (MSB) $SC_{N-1}$ et $SC_{N-2}$ des I=3 bits du signal de commande SC, ces deux bits étant représentatifs du niveau d'échantillonnage du signal ST par rapport aux trois seuils Si, Sc et Ss.

Le troisième signal d'erreur $\gamma_k$ prend l'état "+1" ou "-1" en dépendance de l'état "1" ou "0" du bit de poids faible (LSB) $SC_{N-3}$ du signal de commande SC.

Le second signal d'erreur $\varepsilon_k^+$ prend systématiquement une valeur nulle "0", excepté pour des ensembles à 3 bits $SC_{N-1}$, $SC_{N-2}$ $SC_{N-3}$ égaux à "101" et "110" du signal de commande SC pour lesquelles il prend les états respectifs "-1" et "+1". Ces ensembles à 3 bits "101" et "110" correspondent à des niveaux du signal ST proches et situés de part et d'autre du seuil supérieur Ss.

Le premier signal d'erreur $\varepsilon_k^-$ prend systématiquement une valeur nulle "0", excepté pour des ensembles à 3 bits $SC_{N-1}$, $SC_{N-2}$, $SC_{N-3}$ égaux à "001" et "010" du signal de commande SC pour lesquelles il prend les états respectifs "-1" et "+1". Ces ensembles à 3 bits "001" et "010" correspondent à des niveaux du signal ST proches et situés de part et d'autre du seuil inférieur $S_i$.

Le signal d'erreur $\gamma_k$ est intégré par période nettement supérieure à la période du signal d'horloge H1 par l'intégrateur 34° en un signal d'erreur de décalage intégré qui est appliqué à une première entrée de l'additionneur 35°. Une seconde entrée de l'additionneur 35° est portée à une tension de point milieu (VS + VI) /2 existante à la borne commune aux résistances $302_2N-1$ et $302_2N-1_{-1}$, qui est sensiblement égale à $E_n$ selon la réalisation illustrée à la figure 6. La sortie de l'additionneur 35° est reliée à une première entrée de l'additionneur 36 dont une seconde entrée reçoit le signal en bande de base S*. La composante $E_{n'}$ additionnée au signal S* à travers l'additionneur 36, translate le signal en bande de base S* dans une plage de tension positive coïncidant avec la plage de quantification du convertisseur analogique-numérique 30, typiquement comprise entre 0 et 5 volts.

Le premier signal d'erreur $\varepsilon_k^-$ est intégré en fonction du temps par l'intégrateur $34^-$ analogue à l'intégrateur 34° pour produire un signal d'erreur inférieur intégré qui est appliqué à une première entrée de l'additionneur $35^-$. Une seconde entrée de l'additionneur $35^-$ est portée à une tension nominale inférieure $VN^-$. L'additionneur $35^-$ produit la tension inférieure VI qui est appliquée à ladite borne de la première résistance $302_0$.

Le second signal d'erreur $\varepsilon_k^+$ est intégré en fonction du temps par l'intégrateur $34^+$ analogue à l'intégrateur 34° pour produire un signal d'erreur supérieur intégré qui est appliqué à une première entrée de l'additionneur $35^+$. Une seconde entrée de l'additionneur $35^+$ est portée à une tension nominale supérieure $VN^+$. L'additionneur $35^+$ produit la tension supérieure VS appliquée à ladite borne de la dernière résistance $302_2N_{-1}$.

Il est maintenant détaillé en référence aux figures 6 et 7 le fonctionnement du dispositif de décision à seuils adaptatifs 3 ainsi que les rôles joués par trois boucles d'asservissement en tension. La première boucle comprend l'intégrateur 34°, l'additionneur 35° et l'additionneur 36. La seconde boucle comprend l'intégrateur $34^-$ et l'additionneur $35^-$. La troisième boucle comprend l'intégrateur $34^+$ et l'additionneur $35^+$.

Selon la figure 7, le signal d'erreur inférieur $\varepsilon_k^-$ passe de l'état "-1" à l'état "+1" pour un changement du signal de commande SC de "001" à "010", et inversement. Ces valeurs correspondent à deux niveaux de quantification du signal en bande de base ST dans les bascules $301_1$ à $302_2N_{-1}$ respectivement inférieur et supérieur au seuil inférieur Si. Grâce à l'intégration du signal d'erreur $\varepsilon_k^-$, la tension limite inférieure VI est asservie aux configurations binaires "001" et "010" dans le signal de commande SC et ainsi aux distorsions subies par le signal en bande de base S* dans la partie inférieure Oi du diagramme de l'oeil. En moyenne, si le signal d'erreur $\varepsilon_k^-$ demeure à l'état "-1", cela signifie que le seuil Si est trop élevé. Dans ce cas, la tension limite inférieure VI est diminuée par asservissement à une valeur sensiblement inférieure à la valeur nominale inférieure $VN^-$, ce qui diminue également le seuil inférieur Si $\cong$ [VI + (VS -VI) /4]. A contrario, si le signal d'erreur $\varepsilon_k^-$ demeure à l'état "+1", la tension VI est augmentée à une valeur sensiblement supérieure à $VN^-$ ce qui augmente le seuil inférieur Si.

Ce qui vient d'être décrit peut être reporté en ce qui concerne l'asservissement de la tension limite supérieure VS et du seuil Ss $\cong$ VS - (VS - VI) /4 en fonction des configurations "101" et "110" du signal de commande SC à travers le signal d'erreur $\varepsilon_k^+$ dans la boucle d'asservissement constituée des éléments $34^-$ et $35^-$, et ainsi en fonction des distorsions subies par le signal en bande de base S* dans la partie supérieure Os du diagramme de l'oeil.

Selon une variante moins performante, en l'absence de la boucle d'asservissement du seuil central Sc, c'est-à-dire de l'intégrateur 34° et du sommateur 35°, le point milieu de la série de résistances $302_0$ à $302_2N_{-1}$ est relié directement à la première entrée de l'additionneur 36. La tension (VS VI) /2 au point milieu varie alors en fonction de la moyenne des tensions limites asservies VI et VS afin que le convertisseur 30 fonctionne linéairement dans sa plage de quantification positive.

Toutefois, selon la figure 6, l'intégrateur 34° et le sommateur 35° contribuent à asservir le seuil central Sc en fonction des distorsions centrales dans le signal en bande de base S* et particulièrement pour l'oeil Oc. En effet, si après intégration, le troisième signal d'erreur $\gamma_k$ tend vers "-1", respectivement vers "+1", cela signifie que le seuil Sc, c'est-à-dire la tension "$E_n$" au point milieu de la série de résistances, est trop élevé, respectivement trop faible, et qu'il doit être diminué, respectivement augmenté.

Ainsi le seuil central Sc suit les variations des tensions limites VI et VS tout en étant asservi lui-même en fonction des distorsions affectant les symboles "-1" et "1" du signal reçu 4FSK.

En variante, le troisième signal d'erreur $\gamma_k$ est un signal à trois niveaux qui est l'état "0" excepté pour des ensembles "011" et "100" du signal de commande SC pour lesquels il prend les états respectifs "-1" et "+1".

Comparativement à la technique antérieure, le dispositif de décision à seuils adaptatifs 3 selon l'invention n'opère pas une translation globale du signal en bande de base au moyen d'un amplificateur à commande automatique de gain. En d'autre termes, le dispositif 3 ne multiplie pas simultanément par un même gain de tension les seuils Si, Sc et Ss, mais ajuste indépendamment chacun de ces trois seuils de manière à s'adapter au mieux au caractère dissymétrique du diagramme de l'oeil, et donc aux niveaux pris par le signal en bande de base S* à des instants d'échantillonnage successifs en fonction des symboles reçus.

## Revendications

**1** - Dispositif de décision (3) pour produire, à une fréquence de symbole, des symboles ($a_k$) en fonction de niveaux d'un signal en bande de base (S*) résultant d'une démodulation (23) d'un signal modulé en fréquence à plusieurs états, caractérisé en ce qu'il comprend

un moyen de division de tension ($302_0$-$302_2N_{-1}$) ayant des première et seconde bornes auxquelles sont appliquées respectivement des tensions inférieure (VI) et supérieure (VS) limitant une plage de tension, pour établir plusieurs tensions ($E_1$-$E_2N_{-1}$) réparties dans ladite plage,

un moyen d'addition (36) pour additionner le signal en bande de base (S*) à une tension milieu ((VI + VS) /2) qui est sensiblement égale à la moyenne des tensions inférieure et supérieure et établie par le moyen de division de tension de manière à produire un signal translaté (ST),

plusieurs moyens de comparaison ($300_1$-$300_2N_{-1}$) pour comparer le signal translaté (ST) respectivement avec lesdites plusieurs tensions ($E_1$-$E_2N_{-1}$) afin de produire des signaux de résultat de comparaison,

un moyen de codage ($301_1$-$301_2N_{-1}$ 303; 304) pour établir des mots de commande (SC) à la fréquence de symbole, chacun des mots de commande étant fonction des signaux de résultat de comparaison qui sont représentatifs d'un niveau du signal en bande de base (S*) par rapport à des seuils de décision inférieur, central et supérieur (Si, Sc, Ss) correspondant respectivement à trois tensions desdites plusieurs tensions, et

des premier et second moyens d'asservissement (31, $34^-$, $35^-$; 31, $34^+$, $35^+$) pour asservir respectivement et indépendamment les tensions inférieure et supérieure (VI, VS) en fonction des mots de commande (SC).

**2** - Dispositif conforme à la revendication 1, caractérisé en ce que les premier et second moyens d'asservissement comprennent respectivement

des premier et second moyens logiques (31) pour produire respectivement des premier et second signaux d'erreur à trois états ($\varepsilon_k^-$;$\varepsilon_k^+$),

le premier, respectivement second, signal d'erreur étant à deux états prédéterminés ("-1", "+1") uniquement en réponse à deux premiers, respectivement seconds, mots de commande prédéterminés ("001", "010"; "101", "110") dépendant de deux premiers, respectivement seconds, niveaux du signal translaté (ST) situés de part et d'autre du seuil de décision inférieur (Si), respectivement supérieur (Ss),

des premier et second intégrateurs ($34^-$;$34^+$) pour intégrer les premier et second signaux d'erreur en des premier et second signaux intégrés, et

des premier et second additionneurs ($35^-$; $35^+$) pour additionner respectivement le premier signal intégré avec une tension nominale inférieure ($VN^-$) et le second signal intégré avec une tension nominale supérieure ($VN^+$) afin d'établir lesdites tensions inférieure et supérieure (VI; VS).

**3** - Dispositif conforme à la revendication 1 ou 2, comprenant un troisième moyen d'asservissement (31, $34°$, $35°$) pour asservir, en fonction des mots de commande (SC) et de la tension milieu, le seuil de décision central (Sc) à additionner, à la place de la tension milieu ((VI + VS)/2), au signal en bande de base (S*) dans le moyen d'addition (36).

**4** - Dispositif conforme à la revendication 3, caractérisé en ce que le troisième moyen d'asservissement comprend

un troisième moyen logique (31) pour produire un troisième signal d'erreur à au moins deux états ($\gamma$k), le troisième signal d'erreur étant à deux états prédéterminés ("-1","+1") en réponse à deux troisièmes mots de commande prédéterminés ("011", "100") dépendant de deux troisièmes niveaux du signal translaté (ST) situés de part et d'autre du seuil de décision central (Sc),

un troisième intégrateur ($34°$) pour intégrer le troisième signal d'erreur en un troisième signal intégré, et

un troisième additionneur ($35°$) pour additionner le troisième signal intégré et ladite tension milieu ((VI + VS) /2) afin d'établir ledit seuil de décision central (Sc).

**5** - Dispositif conforme à l'une quelconque des revendications 1 à 4, caractérisé en ce que ledit moyen de codage comprend

plusieurs moyens ($301_1$-$301_2N_{-1}$) pour échantillonner à la fréquence de symbole les signaux de résultat de comparaison en des signaux de comparaison échantillonnés, et

un moyen (303) pour coder les signaux de comparaison échantillonnés en un mot de rang (N) identifiant le rang le plus élevé de moyens de comparaison ayant produit un signal de résultat de comparaison avec un niveau logique prédéterminé ("1"), au moins trois bits de poids forts des mots de rang constituant les mots de commande (SC).

**6** - Dispositif conforme à la revendication 5, comprenant un circuit de récupération de rythme (32) recevant l'un des bits dudit mot de rang (N) pour produire un signal d'échantillonnage (H2) cadençant l'échantillonnage dans les moyens pour échantillonner ($301_1$ - $301_2N_{-1}$).

**7** - Dispositif conforme à l'une quelconque des revendications 1 à 6, disposé en aval d'un discriminateur de démodulation de fréquence (23) dans un moyen de réception (2) d'un système de modulation-démodulation de fréquence à quatre états.

# FIG.1
(TECHNIQUE ANTERIEURE)

EMISSION 1

# FIG.2
(TECHNIQUE ANTERIEURE)

RECEPTION 2

## FIG.3

## FIG.4

EP 0 679 001 A1

# FIG.5

## (TECHNIQUE ANTERIEURE)

# FIG.7

11

FIG.6

CONVERTISSEUR A-N

ENCODEUR

ETAGE DE N BASCULES

CIRCUIT LOGIQUE DE CALCUL (FIG. 7)

CIRCUIT DE RECUPERATION DE RYTHME

DISPOSITIF DECISION A SEUILS ADAPTIFS

COMPARATEURS

BASCULES D

VCXO

**Office européen
des brevets**

**RAPPORT DE RECHERCHE EUROPEENNE**

Numero de la demande

EP 95 40 0554

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP,A,0 467 446 (PHILIPS)<br>* abrégé; figure 1 *<br>* page 4, ligne 52 - page 5, ligne 6 *<br>--- | 1-7 | H04L25/06 |
| A | EP,A,0 153 708 (NTT)<br>* abrégé; figure 8 *<br>----- | 1-7 | |

DOMAINES TECHNIQUES
RECHERCHES (Int.Cl.6)

H04L

Le présent rapport a été établi pour toutes les revendications

| Lieu de la recherche | Date d'achèvement de la recherche | Examinateur |
|---|---|---|
| LA HAYE | 10 Juillet 1995 | Scriven, P |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)